# EUROPÄISCHE PATENTSCHRIFT

(11) **EP 3 191 641 B1**
(45) Veröffentlichungstag und Bekanntmachung des Hinweises auf die Patenterteilung: **28.10.2020**
(21) Anmeldenummer: 15810727.6
(22) Anmeldetag: 09.09.2015
(51) Int. Cl.: D07B 1/14

(54) **FASERSEIL**
FIBER ROPE
CÂBLE DE FIBRES

(30) Priorität: 11.09.2014 AT 5014614 U
(43) Veröffentlichungstag der Anmeldung: 19.07.2017
(73) Patentinhaber: Teufelberger Holding Aktiengesellschaft, 4600 Wels (AT)
(72) Erfinder: TRAXL, Robert, A-4600 Wels (AT); KAISER, Gunter, A-4600 Wels (AT); BALDINGER, Peter, A-4311 Schwertberg (AT); ERNST, Björn, A-4600 Wels (AT); RÜHRNÖSSL, Erich, A-4600 Wels (AT); KIRTH, Rudolf, A-4840 Vöcklabruck (AT)
(74) Vertreter: Sonn & Partner Patentanwälte
(86) Internationale Anmeldenummer: PCT/AT2015/050221
(87) Internationale Veröffentlichungsnummer: WO 2016/037207

(56) Entgegenhaltungen:
- WO-A1-2004/029343
- WO-A1-2014/037350
- JP-A- 2012 012 172
- SU-A1- 798 926
- US-A- 3 620 357
- US-A1- 2003 062 225
- US-A1- 2006 219 528
- US-A1- 2008 105 059
- US-A1- 2009 145 730
- MOLKOW M: "WIRE ROPES AND NEW SUSPENSION MEANS DESIGN, USE, SAFETY, HANDLING AND CARE, DISCARD CRITERIA", LIFT-REPORT, RRD GMBH, DORTMUND, DE, Bd. 27, Nr. 5, 1. September 2001 (2001-09-01), Seiten 14,16,18-20, XP001092527, ISSN: 0341-3721

## Beschreibung

Die Erfindung betrifft ein Faserseil mit Last tragenden Seilelementen und mit magnetischen Markierelementen zur Detektion von Verformungen der Seilelemente, wobei die Markierelemente pulverförmiges Material aufweisen.

Seile, die Last tragende Seilelemente, wie Fasern, aufweisen und mit magnetischen Markierelementen versehen sind, um durch Beanspruchung verursachte Veränderungen bzw. Verformungen am Seil rechtzeitig vor einem Versagen des Seils erkennen zu können, sind aus dem Stand der Technik bekannt. Hierbei werden die Positionen der Markierelemente mit geeigneten Messeinrichtungen überwacht, und aus beobachteten Veränderungen der Positionen wird auf die Ablegereife des Seils bzw. auf einen geeigneten Zeitpunkt für einen Austausch des Seils geschlossen.

Die EP 0 849 208 A1 offenbart z.B. ein Aufzugseil aus synthetischem Fasermaterial, beispielsweise Kevlar, in welchem in der Seil-Längsrichtung voneinander beabstandete Markierelemente in Form von Markierkörpern angeordnet sind. Eine nahe dem Seil angeordnete Überwachungseinheit ermittelt die Abstände der Markierelemente, sodass im Falle einer Seildehnung und somit einer Vergrößerung der überwachten Abstände eine allfällige Wartung oder ein Austausch des Seils, vor dessen Versagen, vorgenommen werden kann. Die Markierelemente weisen magnetische Eigenschaften auf, und sie sind vorzugsweise kugelförmig aus Stahl hergestellt. Alternativ können die Markierelemente aus leitfähigem, elektromagnetische Wellen reflektierendem, beispielsweise zylinderförmigem Material bestehen. Die Markierelemente sind im Seil entweder in einem elastischen Schlauch angeordnet und durch Abstandshalter voneinander getrennt, oder sie sind in das Seil gewoben. In letzterem Fall wird beispielsweise eine Litze mit abwechselnd eisenhaltigem und nicht eisenhaltigem Material in das Seil gewoben.

Aus der WO 2008/119093 A2 sind in Seilen angeordnete Magnete bekannt, deren gegenseitige Abstände mit Hilfe von elektromagnetischen Messeinrichtungen erfasst werden, sodass auf diese Weise übermäßige Längenänderungen der Seile festgestellt werden können.

Die WO 2014/037350 A1 betrifft ein Verfahren zum zerstörungsfreien Testen synthetischer Seile, welche zumindest zwei Faserarten aus Polymermaterial aufweisen. Die erste Faserart trägt hauptsächlich zur Lastaufnahme bei, während die zweite Faserart die Möglichkeit bietet, sich verändernde Seileigenschaften zu erkennen. Zur Herstellung der zweiten Faserart kann ein Metall, insbesondere ein ferromagnetisches Pulver, auf die erste Faserart durch Beschichten oder Sprühen aufgebracht werden.

Die US 2008/105059 A1 offenbart ein System zur Messung von Seildehnungen. Hierfür werden im oder am zu messenden Seil magnetische Markierelemente vorgesehen, die diskontinuierlich in einem bestimmten Maß voneinander beabstandet angeordnet sind. Über einen Positionssensor und einen Triggersensor werden individuelle Abstände des belasteten Seils zwischen den Markierelementen erfasst.

US 2006/0219528 offenbart ein Förderband mit darin angeordneten Markierungselementen, die eine Menge von magnetischen Teilchen, eingebettet in einem Bindemittel, aufweisen.

Nachteilig ist bei einigen bekannten Seilen, dass die Markierelemente mit magnetischen oder elektrischen Eigenschaften in das Seil eingearbeitet werden müssen, was einerseits einen erhöhten Fertigungsaufwand bedeutet und andererseits den Seildurchmesser erhöht oder bei gleichbleibendem Seildurchmesser die Belastbarkeit des Seils reduziert. Zudem ist bei einigen bekannten Seilen im Allgemeinen nur die Erfassung von Längenänderungen möglich. Weiters erfordert die Herstellung der Markierelemente mit magnetischen oder elektrischen Eigenschaften an bekannten Seilen oftmals hohen Materialaufwand.

Es ist nun Aufgabe der Erfindung, ein Faserseil wie eingangs angegeben mit magnetischen Markierelementen vorzusehen, das einfach und kostengünstig herstellbar ist und dessen Durchmesser bzw. Belastbarkeit durch die Markierelemente im Wesentlichen nicht beeinflusst wird. Zudem soll das Faserseil eine zuverlässige Detektion von Längenänderungen sowie von darüber hinausgehenden Verformungen, wie z.B. Verdrehungen, ermöglichen.

Hierfür sieht die Erfindung ein Faserseil wie in Anspruch 1 definiert vor. Vorteilhafte Ausführungsformen und Weiterbildungen sind in den abhängigen Ansprüchen angegeben.

Das vorliegende Faserseil weist Last tragende Seilelemente, im Allgemeinen Fasern aus einem unmagnetischen bzw. nicht magnetisierbaren Material, beispielsweise Naturfasern oder Kunststofffasern, auf. Zudem weist das Faserseil magnetische Markierelemente auf, die an definierten Seilpositionen angeordnet sind. Auf diese Weise können durch Beanspruchung verursachte Verformungen des Faserseils mittels einer nahe dem Faserseil angeordneten Überwachungseinrichtung beobachtet werden, indem die durch Verformung verursachten Positionsänderungen der Markierelemente erfasst werden. Die Markierelemente sind jedoch nicht als diskrete Körper in das Faserseil eingearbeitet, sondern weisen pulverförmiges Material auf. Besonders bevorzugt bestehen die magnetischen Markierelemente vollständig aus pulverförmigem Material, mit oder ohne Bindemittel, und einem allfälligen Trägermaterial. Auf diese Weise kann im Gegensatz zu den bekannten Faserseilen eine unerwünschte Querschnittsvergrößerung des Faserseils im Bereich der Markierelemente oder, bei gleichbleibendem Querschnitt, eine zumindest stellenweise Schwächung des Faserseils wegen eingefügter Markierelement-Körper vermieden werden. Zudem müssen keine Markierelement-Körper eigens hergestellt und in das Faserseil eingearbeitet werden. Gleichzeitig ist eine zuverlässige und dauerhafte Anbringung der pulverförmiges Material aufweisenden Markierelemente gewährleistet, indem diese entlang der jeweiligen Aufbringungsfläche mit dem Faserseil verbunden sind. Das pulverförmige Material weist im Vergleich zu den aus dem Stand der Technik bekannten Markierkörpern, welche einzeln mit dem Faserseil verbunden oder zumindest einzeln in einer schlauchförmigen Aufnahmevorrichtung angeordnet werden, wesentlich geringere Abmessungen senkrecht zur Längsrichtung des Faserseils auf.

Als pulverförmiges Material wird im Rahmen der Erfindung eine Menge von Teilchen mit einer Korngröße von kleiner als 1mm, vorzugsweise kleiner als 0,05mm, besonders bevorzugt kleiner als 0,005 mm, verstanden, wobei das Pulver Teilchen unterschiedlicher Größe aufweisen kann. Aufgrund der geringen Größe der Pulverteilchen haften diese besonders gut an den jeweiligen Seilkomponenten bzw. in Zwischenräumen davon, ohne negative Auswirkungen auf den Seildurchmesser oder die maximale Seilbelastung zu verursachen. Die Markierelemente sind diskontinuierlich und in Abständen voneinander angeordnet. Pulver kann mit und ohne Trägerflüssigkeit (z.B. durch statische Aufladung) an der Oberfläche einer Seilkomponente (Garn, Zwirn oder Litze) aufgebracht werden. Es ist aber auch möglich, das Pulver teilweise oder vollständig im Querschnitt dieser Komponenten einzubringen.

Da die Markierelemente im unbelasteten Zustand der Seilelemente zueinander unterschiedliche Abstände aufweisen, können die Markierelemente ohne Einhaltung präziser Abstände am bzw. im Faserseil angeordnet, und somit der Herstellungsvorgang vereinfacht werden. Zweckmäßiger Weise werden die unterschiedlichen Abstände noch vor der Belastung des Seils als Referenzwerte für die nachfolgenden Vergleichsmessungen erfasst und gespeichert.

Weiters ist vorgesehen, dass zur Bereitstellung von Information auf mehrere gleich voneinander beabstandete Markierelemente zumindest ein Markierelement in kürzerem oder längerem Abstand folgt. Das Faserseil erhält somit eine Art Kodierung, wobei die Information im Abstandsmuster der Markierelemente enthalten ist. Dies ist besonders zweckmäßig, wenn das Faserseil mehrere diskontinuierliche Markierelemente aufweist, deren Positionen entlang des Faserseils sich auf Grund unterschiedlicher Belastungen wie Seildehnung und Seilverdrehung unterschiedlich ändern. Die gezielt in kürzerem oder längerem Abstand angeordneten Markierelemente können beispielsweise eine Referenzposition darstellen, um einfacher zwischen einem verschobenen (n)-ten Markierelement im Seilinneren und einem vorab höher oder tiefer angeordneten nun aber unterschiedlich verschobenen (n+1)-ten Markierelement an der Seilaußenseite zu unterscheiden. Selbstverständlich kann das Abstandsmuster auch andere Informationen beinhalten. Derartige Markierungen können auch zur Kodierung des Seils und / oder zur Bereitstellung von Informationen wie einer Positionsangabe herangezogen werden. In Seiltrieben ist es häufig erforderlich, die abgespulte Länge eines Seils zu kennen. Diese Aufgabe kann durch die Markierelemente ebenso erfüllt werden, da diese, ähnlich einem Barcode, derartige Informationen bereitstellen können. Des Weiteren können die Markierelemente Produktinformationen bereitstellen, z.B. Angaben zur Rückverfolgbarkeit oder Herstellernachweise.

Gemäß einer bevorzugten Ausführungsform der Erfindung sind die Seilelemente zu Litzen bzw. Zwirnen verseilt bzw. verdreht und die Markierelemente zumindest an oder in einer Litze bzw. einem Zwirn und/oder an einem, zumindest eine Litze bzw. einen Zwirn bzw. ein Garn umgebenden Mantel und/oder in einer aus Litzen bzw. Zwirnen bzw. Garnen gebildeten Zwischenlage und/oder an der Seilaußenseite angeordnet. Die aus Fasern gebildeten (gesponnenen) Garne können zu größeren Einheiten, z.B. zu Zwirnen oder Litzen, verseilt werden, auf welchen die Markierelemente aufgebracht werden. In jedem Fall ist die Anbringung der Markierelemente nicht auf bestimmte Positionen am oder im Seil beschränkt. Demnach können die Markierelemente auch auf oder in einem Mantel angeordnet sein, welcher am oder im Seil verläuft. Eine Anordnung der Markierelemente im Seil bietet eine hohe Sicherheit gegenüber einem durch die Verwendung des Faserseils bedingten Abrieb. Demgegenüber können am Umfang angeordnete Markierelemente auch erst nach der Herstellung des Seils an unterschiedlichen, für jedes einzelne Seil speziell geeigneten Stellen vorgesehen werden. Die Faserseile können somit, den jeweiligen Anforderungen entsprechend, in Massenproduktion oder in Einzelanfertigung mit den Markierelementen versehen werden.

Hinsichtlich einer sicheren Detektion der Markierelemente ist es günstig, wenn an zumindest einer Seilquerschnittstelle mehrere Markierelemente angeordnet sind. Beispielsweise können an einer Seilquerschnittstelle mehrere Fasern, Zwirne bzw. Litzen oder noch größere, hieraus gebildete Einheiten Markierelemente aufweisen. Auf diese Weise lässt sich die Aufbringungsfläche der Markierelemente vergrößern, ohne deren Erstreckung in Längsrichtung des Seils vergrößern und hierdurch die Auflösung bzw. Genauigkeit der Detektion verringern zu müssen.

Um sowohl Längenänderungen als auch Verdrehungen des Faserseils erkennen und unterscheiden zu können, ist es zweckmäßig, wenn die Markierelemente diskontinuierlich sowohl an einer zentralen Längslitze bzw. einem zentralen Längszwirn als auch an einer die Längslitze bzw. den Längszwirn umgebenden, insbesondere an der Seilaußenseite verlaufenden, wendelförmigen oder geflochtenen Litze bzw. einem Zwirn angeordnet sind. Hierbei wird davon Gebrauch gemacht, dass sich die Abstände von Markierelementen, die zentral, im Wesentlichen entlang einer Längsmittelachse, im Faserseil diskontinuierlich angeordnet sind, nur im Falle einer Seildehnung, nicht aber durch eine Seilverdrehung zueinander ändern. Demgegenüber bewirkt eine Seilverdrehung, je nach Drehrichtung, eine Verlängerung oder Verkürzung der äußeren Seilschichten und somit sowohl eine Abstandsänderung als auch eine Winkeländerung bzw. Verdrehung der weiter außen, beispielsweise an der Seilaußenseite verlaufenden Markierelemente. Mittels wenigstens eines nahe dem Faserseil angeordneten Sensors können somit alle Längenänderungen und gegebenenfalls auch die Winkeländerungen erkannt werden. Folglich kann, vorzugsweise mittels Unterstützung durch Computer und geeignete Software, jeweils auf eine Seildehnung und eine Seilverdrehung rückgeschlossen werden. Insbesondere liegt eine Seildehnung ohne Verdrehung vor, wenn alle Markierelemente im Wesentlichen eine gleiche Abstandsänderung erfahren. Demgegenüber bleiben die Abstände der zentralen Markierelemente im Wesentlichen gleich, wenn das Faserseil nur verdreht wird. Sollte sowohl eine Dehnung als auch eine Verdrehung vorliegen, kann aus den verschiedenen Abstandsänderungen und gegebenenfalls den Winkeländerungen auf die entsprechenden Verformungen geschlossen werden. Zur Erfassung der Winkeländerungen kann es dabei besonders zweckmäßig sein, die weiter außen am Seil angeordneten Markierelemente wendelförmig anzuordnen.

Zur Erfassung und Unterscheidung von Längenänderungen und Verdrehungen des Faserseils ist es auch vorteilhaft, wenn Markierelemente diskontinuierlich an einer zentralen Längslitze bzw. einem zentralen Längszwirn (oder auch -garn) angeordnet sind und zusätzlich Markierelemente kontinuierlich oder diskontinuierlich, von der zentralen Längslitze bzw. dem zentralen Längsgarn bzw. -zwirn beabstandet, angeordnet sind. Auf diese Weise können einerseits Längenänderungen durch Beobachtung der Abstände der diskontinuierlichen zentralen "Längs"-Markierelemente und andererseits Seilverdrehungen durch Beobachtung der Winkeländerungen der kontinuierlichen oder diskontinuierlichen nicht-zentralen Markierelemente erfasst werden. Die kontinuierlichen oder diskontinuierlichen Verdrehungs-Markierelemente sind beispielsweise an der Seilaußenseite angeordnet. Da diese Markierelemente bei Verdrehungen des Faserseils keine Abstandsänderung in Seillängsrichtung erfassen lassen müssen, werden besonders bevorzugt kontinuierliche Markierungen eingesetzt, was die Auswertung der Seilverformungen gegenüber dem Fall von ausschließlich diskontinuierlichen Markierelementen vereinfacht. Die Erfassung der Winkeländerung kann jedoch eine aufwändigere Sensoreinrichtung erfordern.

Wenn die kontinuierlichen Markierelemente entlang einer wendelförmigen Litze bzw. einem wendelförmigen Zwirn angeordnet sind, ist auch im Falle einer Seildehnung eine bezüglich des Umfangs des Faserseils geänderte Winkelposition der Markierelemente detektierbar. Somit kann mittels wendelförmiger kontinuierlicher Markierelemente die Detektionssicherheit erhöht werden. Zudem können derartige Markierelemente einfach als mit dem pulverförmigen Material versehene Litzen bzw. Zwirne oder daraus verseilten Einheiten in das Faserseil eingebracht werden. Alternativ können die Markierelemente am Ende des Herstellungsvorgangs auf das Faserseil wendelförmig aufgebracht werden.

Eine besonders vorteilhafte, einfache Ausführungsform sieht vor, dass die kontinuierlichen Markierelemente in Seillängsrichtung, insbesondere an der Seilaußenseite und/oder im Inneren des Seiles zum Beispiel entlang von Zwischenlagen oder Innenseilen, verlaufend angeordnet sind. Vorzugsweise werden die Markierelemente am Ende des Herstellungsvorgangs geradlinig auf das Faserseil aufgebracht.

Um die einzelnen Markierelemente sicher voneinander unterscheiden und somit Verformungen des Faserseils zuverlässig detektieren zu können, ist es günstig, wenn die Abstände voneinander beabstandeter Markierelemente mindestens 5mm betragen. Markierlemente mit Längen über 10mm haben sich als günstig erwiesen. Es wäre daher auch denkbar, dass die Markierelemente fast durchgängig sind und nur kurze Unterbrechungen aufweisen. Die Abstände können jedoch wesentlich größer gewählt werden, da größere Längenänderungen einfacher zu detektieren sind. Alternativ kann die Messung der Abstandsänderung über mehrere Markierelemente hinweg erfolgen, um die Messgenauigkeit zu erhöhen.

Des Weiteren kann es günstig sein, dass zur Bereitstellung von Information auf mehrere voneinander beabstandete Markierelemente mit in Seillängsrichtung jeweils gleicher Erstreckung zumindest ein Markierelement mit in Seillängsrichtung hierzu unterschiedlicher, vorzugsweise größerer Erstreckung folgt. Ähnlich wie bei der gezielten Variation der Abstände benachbarter Markierelemente können unterschiedliche Erstreckungen der Markierelemente eine Kodierung des Faserseils darstellen. Auch auf diese Weise können Referenzpositionen für das leichtere Unterscheiden benachbarter Markierelemente im Seilinneren von jenen an der Seilaußenseite erzeugt werden. Um die Detektionssicherheit zu gewährleisten, weisen vorzugsweise die einzelnen unterschiedlichen Markierelemente eine größere Erstreckung auf.

Für eine hohe Detektionssicherheit ist es zudem günstig, wenn jedes der Markierelemente entlang seiner Oberfläche im Wesentlichen konstante magnetische Eigenschaften aufweist. Auf diese Weise sind die Begrenzungen der jeweiligen Markierelemente in Längsrichtung des Faserseils und/oder senkrecht hierzu mittels des wenigstens eines Sensors deutlich zu erkennen. Die Markierelemente können jedoch in unterschiedlicher Intensität lokal eingebracht werden, um dadurch wieder eine Kodierung zu erzeugen.

Besonders günstig ist es, wenn die Markierelemente ferromagnetisches Material aufweisen. Im Vergleich zu diamagnetischem Material wird die Detektionssicherheit wesentlich erhöht.

Die Erfindung wird im Folgenden anhand von bevorzugten, nicht einschränkenden Ausführungsbeispielen unter Bezugnahme auf die Zeichnung noch weiter erläutert. Es zeigen:
Fig. 1 ein Faserseil gemäß einer Ausführungsform der Erfindung mit magnetischen Markierelementen an der Seilaußenseite;
Fig. 2 das Faserseil von Fig. 1 in einer Querschnittsansicht;
Fig. 3 ein Faserseil gemäß einer modifizierten Ausführungsform der Erfindung in einem Längsschnitt, mit diskontinuierlich angeordneten Markierelementen;
Fig. 4 ein Faserseil gemäß einer weiteren Ausführungsform der Erfindung, teilweise im Längsschnitt, mit diskontinuierlich und kontinuierlich angeordneten Markierelementen;
Fig. 5 ein Faserseil gemäß noch einer anderen Ausführungsform der Erfindung, teilweise in einem Längsschnitt, mit diskontinuierlich und kontinuierlich angeordneten Markierelementen; und
Fig. 6 schematisch eine Anordnung einer für das Faserseil von Fig. 5 günstigen Detektionseinrichtung mit diesem Faserseil.

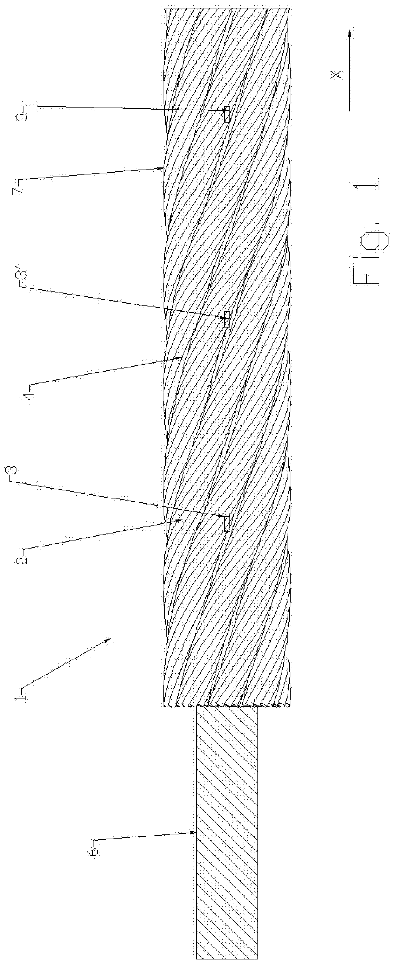

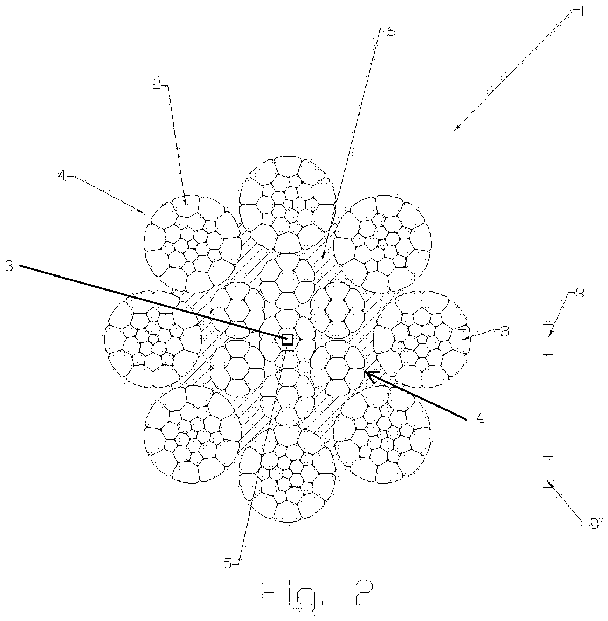

Fig. 1 zeigt ein Faserseil 1, welches Last tragende Seilelemente 2 und magnetische Markierelemente 3 aufweist. Die Last tragenden Seilelemente 2 sind im Wesentlichen Fasern des Seils 1, die zu Garnen gesponnen sein können, die zu Zwirnen bzw. Litzen 4 verseilt sind. Wie aus Fig. 2 ersichtlich, weist das Faserseil 1 innere Zwirne bzw. Litzen 4 mit einer zentralen Längslitze bzw. einem zentralen Längszwirn 5 auf, die von einem Mantel 6 umgeben sind. Um den Mantel 6 sind äußere Zwirne bzw. Litzen 4 angeordnet. Selbstverständlich ist die in Fig. 2 dargestellte Ausführungsform nur als Beispiel zu verstehen. Insbesondere kann das Faserseil 1 gemäß der Erfindung eine andere Anzahl von Litzen bzw. Zwirnen 4 und eine andere Art der Verseilung aufweisen und auch ohne Mantel 6 ausgebildet sein.

Es sei hier erwähnt, dass ein Garn aus textilen Fasern ersponnen wird, wobei die einzelnen Fasern miteinander verdreht werden. Garne sind theoretisch endlos. Werden mehrere Garne miteinander verdreht, entsteht ein Zwirn. Mehrere Zwirne ergeben eine Litze, mehrere Litzen ergeben ein Seil.

Die magnetischen Markierelemente 3, die beispielhaft bzw. symbolisch in Rechteckform dargestellt sind, jedoch auch andere Formen aufweisen können, solange hierdurch die Detektionssicherheit gegeben ist, weisen ein pulverförmiges Material 3' auf und sind am oder im Faserseil 1 angeordnet. Für die Fixierung des pulverförmigen Materials 3' am Faserseil 1 kann beispielsweise ein Bindemittel oder ein Trägermaterial verwendet werden, auf welchem das pulverförmige Material 3' haftet oder in welchem es aufgenommen ist. Die Anordnung erfolgt diskontinuierlich, mit gleichem oder unterschiedlichem Abstand zwischen den Markierelementen 3, und gegebenenfalls kontinuierlich in Seillängsrichtung x oder entlang einer wendelförmigen Litze bzw. einem wendelförmigen (oder geflochtenen) Zwirn 4. Fig. 1 zeigt mehrere diskontinuierlich an der Seilaußenseite 7 angeordnete Markierelemente 3 und Fig. 2 zeigt zudem eines von mehreren diskontinuierlich an der zentralen Längslitze bzw. dem zentralen Längszwirn 5 angeordneten Markierelementen 3.

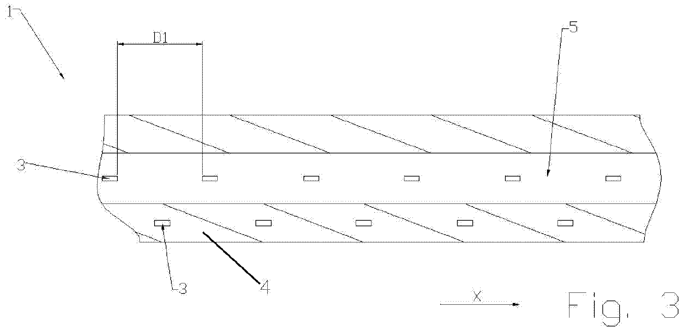

Fig. 3 stellt eine Ausführung eines Faserseils 1 dar, in welcher in Seillängsrichtung x mehrere Markierelemente 3 diskontinuierlich und in gleichen Abständen D1 sowohl entlang der zentralen Längslitze bzw. dem zentralen Längszwirn 5 als auch auf äußeren Litzen bzw. Zwirnen 4, insbesondere an der Seilaußenseite 7, angeordnet sind. Wird das Faserseil 1 durch Beanspruchung gedehnt, so vergrößern sich die Abstände D1 im Wesentlichen aller diskontinuierlichen Markierelemente 3 zueinander. Wird hingegen das Faserseil 1 durch Beanspruchung nur verdreht, so bleiben die Abstände D1 entlang der zentralen Längslitze bzw. dem zentralen Längszwirn 5 im Wesentlichen gleich, während sich die Abstände D1 der Markierelemente 3 auf den äußeren Litzen bzw. Zwirnen 4 je nach Drehrichtung vergrößern oder verkleinern.

Eine in Fig. 2 schematisch dargestellte Detektionseinrichtung 8, welche einen Sensor zur Erkennung von magnetischem Material aufweist, erfasst die Positionen der Markierelemente 3 entlang des Faserseils 1 und übermittelt die Messwerte vorzugsweise an eine nur schematisch dargestellte Recheneinheit 8' zur Auswertung der Daten. Die Detektionseinrichtung 8 ist insbesondere auch ausgebildet, Positionsänderungen der Markierelemente 3 auf den äußeren Litzen bzw. Zwirnen 4 von den gegebenenfalls unveränderten Positionen der Markierelemente 3 auf der zentralen Längslitze bzw. dem zentralen Längszwirn 5 zu unterscheiden. Im Falle übermäßiger, sich im Laufe der Zeit durch Beanspruchung einstellender Abstandsänderungen kann daher das Faserseil 1 rechtzeitig, vor einem Seilbruch, ausgetauscht werden.

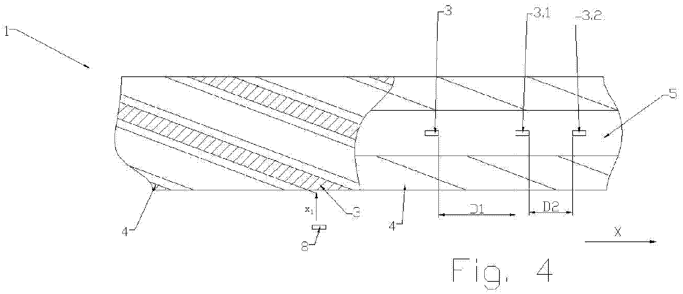

In Fig. 4 ist ein Teil eines Faserseils 1 mit mehreren diskontinuierlich angeordneten Markierelementen 3 entlang der zentralen Längslitze bzw. dem zentralen Längszwirn 5 und mit kontinuierlich angeordneten Markierelementen 3 entlang äußeren, wendelförmigen Litzen bzw. Zwirnen 4, insbesondere an der Seilaußenseite 7, veranschaulicht. Während auch hier eine Seildehnung mittels der zentralen Markierelemente 3 erfasst werden kann, ändert sich im Falle einer Seilverdrehung nur die Position der kontinuierlichen Markierelemente 3 an einer jeweiligen Position X1 des Detektors 8. Ändern sich somit die Positionen der Markierelemente 3 entlang der äußeren Litzen bzw. Zwirne 4 in einem anderen Ausmaß als jene der zentralen Markierelemente 3, so hat sich das Faserseil 2 im Allgemeinen gedehnt und verdreht.

Um die zentralen Markierelemente 3 von äußeren Markierelementen 3 besser unterscheiden zu können, kann das Faserseil 1 Referenzpositionen aufweisen, die beispielsweise durch gezielt kleinere oder größere Abstände zum vorherigen bzw. nächsten Markierelement 3 gebildet sind. Ein derartige Referenzposition ist in Fig. 4 durch die Markierelemente 3.1 und 3.2 dargestellt. Beispielsweise könnte auf jeweils zehn diskontinuierliche, gleich beabstandete (Abstand D1) Markierelemente 3 ein Markierelement 3 mit verringertem Abstand D2 folgen. Durch ungleichmäßige Abstände D1, D2 der Markierelemente 3 kann jedoch allgemein auch eine andere Information auf bzw. in das Faserseil 1 kodiert werden.

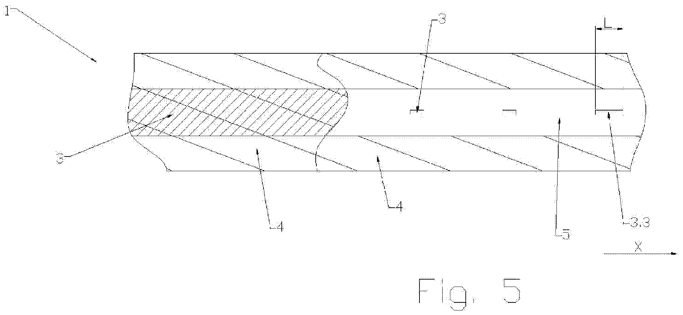

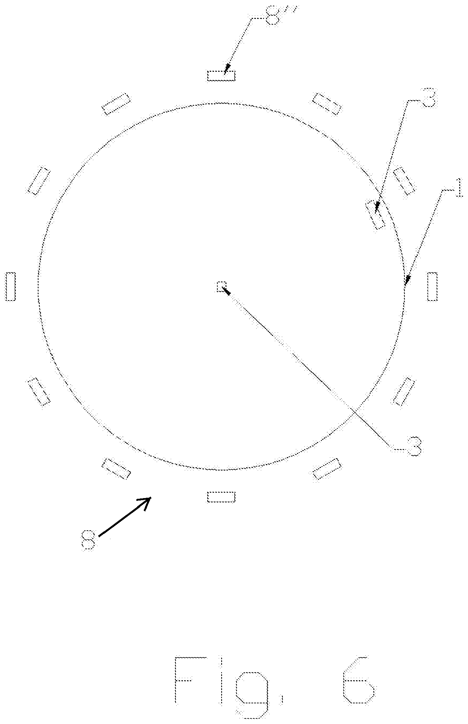

Fig. 5 zeigt einen Teil eines anderen Faserseils 1 mit mehreren diskontinuierlich angeordneten Markierelementen 3 entlang einer zentralen Längslitze bzw. einem zentralen Längszwirn 5 und mit kontinuierlich angeordneten Markierelementen 3, welche in Seillängsrichtung x, insbesondere an der Seilaußenseite 7, verlaufend angeordnet sind. Eine derartige Anordnung der kontinuierlichen Markierelemente 3 erlaubt die Erfassung einer Seilverdrehung besonders zuverlässig mittels einer Detektionseinrichtung 8, die wie in Fig. 6 dargestellt mehrere, beispielsweise 12 um den Umfang des Faserseils 1 gleichmäßig verteilte Sensoren 8" aufweist.

Aus Fig. 5 geht zudem eine weitere Ausführung zur Schaffung von Referenzpositionen am Faserseil 1 hervor, indem eines oder mehrere der Markierelemente, z.B. 3.3, im Vergleich zu den anderen Markierelementen 3 eine unterschiedliche, insbesondere größere Erstreckung L aufweist.

## Patentansprüche

1. Faserseil (1) mit Last tragenden Seilelementen (2) und mit magnetischen Markierelementen (3) zur Detektion von Verformungen der Seilelemente (2), wobei die Markierelemente (3) pulverförmiges Material aufweisen, die Markierelemente (3) diskontinuierlich und in Abständen voneinander angeordnet sind, wobei ein besagtes magnetisches Markierelement (3) eine Menge von Teilchen mit einer Korngröße von kleiner als 1 mm aufweist, die Markierelemente (3) im unbelasteten Zustand der Seilelemente (2) zueinander unterschiedliche Abstände (D1, D2) aufweisen und wobei zur Bereitstellung von Information auf mehrere gleich (D1) voneinander beabstandete Markierelemente (3) zumindest ein Markierelement (3.2) in kürzerem oder längerem Abstand (D2) folgt.

2. Faserseil (1) nach Anspruch 1, **dadurch gekennzeichnet, dass** die Seilelemente (2) zu Zwirnen bzw. Litzen (4) verseilt bzw. verdreht sind und die Markierelemente (3) zumindest an oder in einer Litze bzw. einem Zwirn (4) und/oder an einem zumindest eine Litze bzw. einen Zwirn (4) bzw. ein Garn umgebenden Mantel (6) und/oder in einer aus Litzen bzw. Zwirnen bzw. Garnen (4) gebildeten Zwischenlage und/oder an der Seilaußenseite (7) angeordnet sind.

3. Faserseil (1) nach Anspruch 1 oder 2, **dadurch gekennzeichnet, dass** an zumindest einer Seilquerschnittstelle mehrere Markierelemente (3) angeordnet sind.

4. Faserseil (1) nach Anspruch 2 oder 3, **dadurch gekennzeichnet, dass** die Markierelemente (3) diskontinuierlich sowohl an einer zentralen Längslitze bzw. einem zentralen Längszwirn (5) als auch an einer die Längslitze bzw. den Längszwirn (5) umgebenden, insbesondere an der Seilaußenseite (7) verlaufenden, wendelförmigen oder geflochtenen Litze bzw. Zwirn (4) angeordnet sind.

5. Faserseil (1) nach Anspruch 2 oder 3, **dadurch gekennzeichnet, dass** Markierelemente (3) diskontinuierlich an einer zentralen Längslitze bzw. einem zentralen Längszwirn (5) angeordnet sind und zusätzlich Markierelemente (3) kontinuierlich oder diskontinuierlich, von der zentralen Längslitze bzw. dem zentralen Längszwirn (5) beabstandet, angeordnet sind.

6. Faserseil (1) nach Anspruch 5, **dadurch gekennzeichnet, dass** die kontinuierlichen Markierelemente (3) entlang einer wendelförmigen Litze bzw. einem wendelförmigen Zwirn (4) angeordnet sind.

7. Faserseil (1) nach Anspruch 5, **dadurch gekennzeichnet, dass** die kontinuierlichen Markierelemente (3) in Seillängsrichtung (x), insbesondere an der Seilaußenseite (7) und/oder im Inneren des Seiles zum Beispiel entlang von Zwischenlagen oder Innenseilen, verlaufend angeordnet sind.

8. Faserseil (1) nach einem der Ansprüche 1 bis 7, **dadurch gekennzeichnet, dass** die Abstände (D1, D2) voneinander beabstandeter Markierelemente (3) mindestens 5mm betragen.

9. Faserseil (1) nach einem der Ansprüche 1 bis 8, **dadurch gekennzeichnet, dass** zur Bereitstellung von Information auf mehrere voneinander beabstandete Markierelemente (3) mit in Seillängsrichtung (x) jeweils gleicher Erstreckung zumindest ein Markierelement (3.3) mit in Seillängsrichtung (x) hierzu unterschiedlicher, vorzugsweise größerer Erstreckung (L) folgt.

10. Faserseil (1) nach einem der Ansprüche 1 bis 9, **dadurch gekennzeichnet, dass** jedes der Markierelemente (3, 3.1, 3.2, 3.3) entlang seiner Oberfläche im Wesentlichen konstante magnetische Eigenschaften aufweist.

11. Faserseil (1) nach einem der Ansprüche 1 bis 10, **dadurch gekennzeichnet, dass** die Markierelemente (3, 3.1, 3.2, 3.3) ferromagnetisches Material aufweisen.

## Claims

1. Fibre rope (1) comprising load-bearing rope elements (2) and magnetic marking elements (3) for detecting deformations of the rope elements (2), wherein the marking elements (3) comprise powdered material and the marking elements (3) are arranged discontinuously and at intervals from one another, wherein a magnetic marking element (3) of this kind has an amount of particles having a grain size of less than 1 mm and the marking elements (3) are at different distances (D1, D2) from one another in the unloaded state of the rope elements (2), and wherein, in order to provide information, at least one marking element (3.2) follows a plurality of equally (D1) mutually spaced marking elements (3) at a shorter or longer distance (D2).

2. Fibre rope (1) according to claim 1, **characterised in that** the rope elements (2) are stranded and twisted to form yarns and strands (4), respectively, and the marking elements (3) are arranged at least on or in a strand or a yarn (4) and/or on a sheath (6) surrounding at least one strand, yarn (4) or thread and/or in an intermediate layer formed by strands, yarns or threads (4) and/or on the outside (7) of the rope.

3. Fibre rope (1) according to either claim 1 or claim 2, **characterised in that** a plurality of marking elements (3) are arranged at at least one cross-sectional point of the rope.

4. Fibre rope (1) according to either claim 2 or claim 3, **characterised in that** the marking elements (3) are arranged discontinuously on a central longitudinal strand or a central longitudinal yarn (5) and on a helical or braided strand or yarn (4) which surrounds the longitudinal strand or the longitudinal thread (5), respectively, and in particular extends on the outside (7) of the rope.

5. Fibre rope (1) according to either claim 2 or claim 3, **characterised in that** marking elements (3) are arranged discontinuously on a central longitudinal strand or a central longitudinal yarn (5) and additional marking elements (3) are arranged continuously or discontinuously at a distance from the central longitudinal strand or the central longitudinal yarn (5).

6. Fibre rope (1) according to claim 5, **characterised in that** the continuous marking elements (3) are arranged along a helical strand or a helical yarn (4).

7. Fibre rope (1) according to claim 5, **characterised in that** the continuous marking elements (3) are arranged so as to extend in the longitudinal direction (x) of the rope, in particular on the outside (7) of the rope and/or inside the rope, for example along intermediate layers or inner ropes.

8. Fibre rope (1) according to any of claims 1 to 7, **characterised in that** the distances (D1, D2) between mutually spaced marking elements (3) are at least 5 mm.

9. Fibre rope (1) according to any of claims 1 to 8, **characterised in that**, in order to provide information, a plurality of mutually spaced marking elements (3) which each have the same extension in the longitudinal direction (x) of the rope are followed by at least one marking element (3.3) having a different, preferably greater, extension (L) in the longitudinal direction (x).

10. Fibre rope (1) according to any of claims 1 to 9, **characterised in that** each of the marking elements (3, 3.1, 3.2, 3.3) has substantially constant magnetic properties along the surface thereof.

11. Fibre rope (1) according to any of claims 1 to 10, **characterised in that** the marking elements (3, 3.1, 3.2, 3.3) comprise ferromagnetic material.

## Revendications

1. Câble à fibres (1) avec des éléments de câble porteurs (2) et avec des éléments de marquage magnétiques (3) pour la détection de déformations des éléments de câble (2), dans lequel les éléments de marquage (3) comprennent un matériau pulvérulent, les éléments de marquage (3) étant disposés de manière discontinue et à distance les uns des autres, dans lequel un desdits éléments de marquage magnétiques (3) contient une quantité de particules avec une taille de grains inférieure à 1 mm, les éléments de marquage (3) présentant, dans l'état non chargé des éléments de câble (2), des distances (D1, D2) différentes entre eux et dans lequel, pour la mise à disposition d'informations, à plusieurs éléments de marquage (3) présentant la même distance (D1) entre eux, succède au moins un élément de marquage (3.2) avec une distance (D2) inférieure ou supérieure.

2. Câble à fibres (1) selon la revendication 1, **caractérisé en ce que** les éléments du câble (2) sont torsadés respectivement vrillés en fils retors respectivement en torons (4) et les éléments de marquage (3) sont disposés au moins sur ou dans un toron respectivement un fil retors (4) et/ou sur une enveloppe (6) entourant au moins un toron respectivement un fil retors (4) respectivement un fil et/ou dans une couche intermédiaire constituée de torons respectivement de fils retors ou de fils (4) et/ou sur le côté extérieur du câble (7).

3. Câble à fibres (1) selon la revendication 1 ou 2, **caractérisé en ce que**, sur au moins un point de la section transversale du câble, sont disposés plusieurs éléments de marquage (3).

4. Câble à fibres (1) selon la revendication 2 ou 3, **caractérisé en ce que** les éléments de marquage (3) sont disposés de manière discontinue aussi bien sur un toron longitudinal central respectivement un fil retors longitudinal central (5) que sur le toron respectivement fil retors (4), de forme hélicoïdale ou tressé, entourant le toron longitudinal respectivement le fil retors longitudinal (5), s'étendant plus particulièrement sur le côté extérieur du câble (7).

5. Câble à fibres (1) selon la revendication 2 ou 3, **caractérisé en ce que** des éléments de marquage (3) sont disposés de manière discontinue sur un toron longitudinal central respectivement un fil retors longitudinal central (5) et, en outre, des éléments de marquage (3) sont disposés de manière continue ou discontinue, à une certaine distance du toron longitudinal central respectivement du fil retors longitudinal central (5).

6. Câble à fibres (1) selon la revendication 5, **caractérisé en ce que** les éléments de marquage (3) continus sont disposés le long d'un toron hélicoïdal respectivement d'un fil retors hélicoïdal (4).

7. Câble à fibres (1) selon la revendication 5, **caractérisé en ce que** les éléments de marquage (3) continus sont disposés en s'étendant dans la direction longitudinale (x) du câble, plus particulièrement sur le côté extérieur du câble (7) et/ou à l'intérieur du câble, par exemple le long de couches intermédiaires ou de côtés intérieurs.

8. Câble à fibres (1) selon l'une des revendications 1 à 7, **caractérisé en ce que** les distances (D1, D2) des éléments de marquage (3) distants les uns des autres sont d'au moins 5 mm.

9. Câble à fibres (1) selon l'une des revendications 1 à 8, **caractérisé en ce que**, pour la mise à disposition d'informations, à plusieurs éléments de marquage (3) distants entre eux, avec la même extension dans la direction longitudinale du câble (x), succède au moins un élément de marquage (3.3) avec une extension (L) dans la direction longitudinale (x) du câble différente de celle-ci, de préférence supérieure.

10. Câble à fibres (1) selon l'une des revendications 1 à 9, **caractérisé en ce que** chacun des éléments de marquage (3, 3.1, 3.2, 3.3) présente, le long de sa surface, des propriétés magnétiques sensiblement constantes.

11. Câble à fibres (1) selon l'une des revendications 1 à 10, **caractérisé en ce que** les éléments de marquage (3, 3.1, 3.2, 3.3) comprennent un matériau ferromagnétique.
